(19) **Europäisches Patentamt**
**European Patent Office**
**Office européen des brevets**

(11) **EP 2 407 326 B1**

(12) **EUROPEAN PATENT SPECIFICATION**

(45) Date of publication and mention
of the grant of the patent:
**27.01.2016 Bulletin 2016/04**

(51) Int Cl.:
***B60H 1/00*** *(2006.01)*

(21) Application number: **11250630.8**

(22) Date of filing: **01.07.2011**

(54) **Demand-based fresh air control system**

Bedarfsgesteuertes Frischluftregelungssystem

Système de contrôle d'air frais basé sur la demande

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.07.2010 US 836252**

(43) Date of publication of application:
**18.01.2012 Bulletin 2012/03**

(73) Proprietor: **THERMO KING CORPORATION
Minneapolis
Minnesota 55420 (US)**

(72) Inventors:
• **Yenneti, Srinivasa R.
Uttarahalli
Bangalore 560061 (IN)**

• **Forejt, Lubos
25262 Praha-zapad (CZ)**
• **Cermak, Radim
15800 Prague (CZ)**

(74) Representative: **Holmes, Matthew Peter et al
Marks & Clerk LLP
1 New York Street
Manchester, M1 4HD (GB)**

(56) References cited:
**WO-A1-02/074600     DE-A1-102007 018 572
DE-C1- 19 847 504     JP-A- 2009 051 364**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

A supply of fresh (outdoor) air is required for transport vehicle passenger compartments. It is the purpose of this invention to provide a system and method for providing an appropriate amount of fresh air to a vehicle passenger compartment.

DE 19847504 describes an air volume control method that calculates a minimum fresh air volume independent on a limit value for the concentration of exhaust gases in a passenger space and calculates the temperature of the air to be supplied to the passenger space independent on the difference between the actual and the required air temperature, to determine the heating requirement, used for regulating the volume metric ratio of fresh air and recycled air.

DE 102007018572 describes a device having an air quality sensor producing an air quality signal of air surrounding the sensor.

WO 02/074600 describes a method for controlling the air conditioning of high speed vehicles, in particular rail vehicles.

JP 2009/051364 describes as closest prior art document an air conditioner for vehicles which estimates the number of passengers of the vehicle interior and considers a door opening and can implement air conditioning control of an air conditioner.

SUMMARY

In one embodiment, the invention provides a passenger vehicle air conditioning system that includes a fresh air duct fluidly connecting ambient air of the environment outside of the passenger vehicle and a passenger compartment inside of the passenger vehicle. The passenger vehicle air conditioning system also includes a damper disposed in the fresh air duct and movable within the duct to vary the amount of ambient air allowed to enter the passenger compartment, a sensor operable to monitor a level of contaminate indicative of the contaminate level within the passenger compartment of the passenger vehicle, and a controller in communication with the contaminate sensor and the damper. The controller moves the damper to vary the amount of fresh air that enters the passenger compartment based on the level of contaminate sensed by the contaminate sensor. The passenger vehicle air conditioning system also comprises a door sensor operable to detect the occurrence and monitor the duration of a door opening event of a door to the passenger compartment. The controller is in communication with the door sensor and estimates the fresh air flow rate based on the door opening event as sensed by the door sensor and moves the damper to vary the amount of fresh air that enters the passenger compartment based on the contaminant level sense by the contaminant sensor.

In another embodiment, the invention provides a passenger vehicle having a passenger compartment and a fresh air duct fluidly connecting ambient air of the environment outside of the passenger vehicle and the passenger compartment inside of the passenger vehicle. The passenger vehicle also has a damper disposed in the fresh air duct and movable within the duct to vary the amount of ambient air allowed to enter the passenger compartment, a contaminate sensor operable to monitor a level of contaminate indicative of the contaminate level within the passenger compartment of the passenger vehicle, and a controller in communication with the contaminate sensor and the damper. The controller moves the damper to vary the amount of fresh air that enters the passenger compartment based on the level of contaminate sensed by the contaminate sensor.

One embodiment of the invention provides a method of operating an air conditioning system of a passenger vehicle. The method includes fluidly connecting, with a fresh air duct of the air conditioning system, ambient air of the environment outside of the passenger vehicle and a passenger compartment inside of the passenger vehicle. The method also includes providing a damper disposed in the fresh air duct, monitoring a level of contaminate within a passenger compartment of the passenger vehicle, monitoring an occurent and duration of the door opening event of a door to the passenger compartment, estimating a fresh air flow rate based on the door opening event and moving the damper to vary the amount of fresh air that enters the passenger compartment based on the level of contaminate.

Other aspects of the invention will become apparent by consideration of the detailed description and accompanying drawings.

BRIEF DESCRIPTION OF THE DRAWINGS

Fig. 1 is a schematic view of one embodiment of the invention.
Fig. 2 is a schematic view of the air conditioning system of Fig. 1.

DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways within the scope of the appended claims.

Passengers in a passenger vehicle 10 produce various air contaminates which can be particulate or gaseous in nature. In order to provide a safe and comfortable environment for the driver and passengers riding in a passenger vehicle 10, fresh (outdoor) air must be introduced to dilute the produced contaminates to a safe and acceptable level. The concentration level of the produced contaminants is proportional to the fresh (outdoor) air ventilation rate in a passenger vehicle where the air is mixed. The air in a passenger vehicle can be mixed by a fan, by the movement of people, or by the opening of doors or windows. At lower concentrations, carbon dioxide or other air contaminates can be used as a proxy for human produced odor.

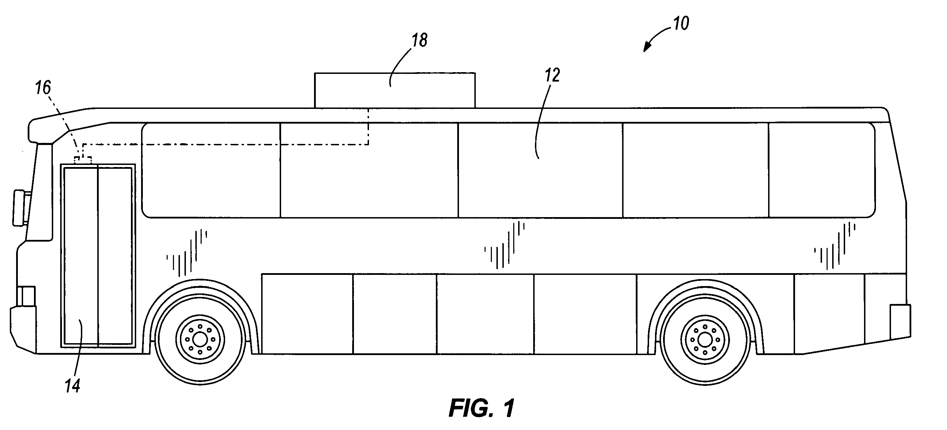

Fig. 1 is a schematic view of a passenger vehicle 10. The passenger vehicle 10 has a passenger compartment 12, a door 14, a door sensor 16, and an air conditioning system 18.

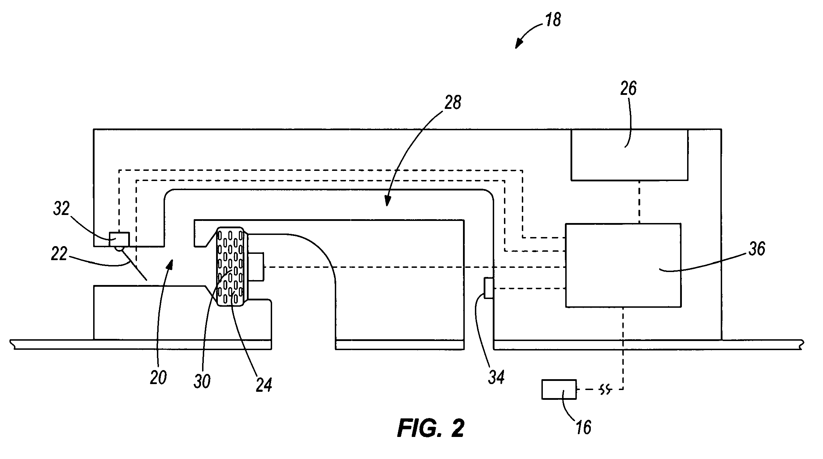

Fig. 2 is a schematic view of the air conditioning system 18 of Fig. 1. The air conditioning system 18 includes a fresh air duct 20 which fluidly connects ambient air of the environment outside of a passenger vehicle 10 and a passenger compartment 12 inside of the passenger vehicle 10. A damper 22 is disposed in the fresh air duct 20 and is operable to vary the amount of fresh air that passes through the fresh air duct 20. An evaporator 24 is disposed in the fresh air duct 20, the evaporator 24 being connected to a compressor 26. A return air duct 28 fluidly connects the passenger compartment 12 to the fresh air duct 20. An evaporator fan 30 is coupled to the evaporator 24 and serves to move fresh air from the fresh air duct 20 into the passenger compartment 12. In an alternative embodiment, the evaporator fan 30 is not coupled to the evaporator 24. The evaporator fan 30 also serves to move air from the passenger compartment 12 into the return air duct 28 and then into the fresh air duct 20. A damper sensor 32 monitors the position of the damper 22. A carbon dioxide sensor 34 is disposed in the return air duct 28 and is operable to monitor a level of carbon dioxide indicative of the level of carbon dioxide within the passenger compartment 12 of the vehicle. A controller 36 communicates with the door sensor 16, damper 22, damper sensor 32, evaporator 24, compressor 26, evaporator fan 30, and carbon dioxide sensor 34.

The controller 36 is operable to move the damper 22 and vary the speed of the compressor 26 and evaporator fan 30. The damper sensor 32 senses the status of the damper 22, including the percentage of full open, the occurrence of a damper opening event and the duration of the damper opening event. The door sensor 16 senses the occurrence of a door opening event, and also measures the duration of the door opening event. The controller 36 is operable to control the damper 22 and the evaporator fan 30 to vary the amount of fresh air that enters the passenger compartment 12 based on the level of carbon dioxide sensed by the carbon dioxide sensor 34. In an alternative embodiment the controller 36 varies the damper 22 and the evaporator fan speed based on the occupancy of the passenger compartment 12, which is predicted by at least one of the level of carbon dioxide sensed by the carbon dioxide sensor 34, the rate of change of the level of carbon dioxide sensed by the carbon dioxide sensor 34, and the amount of fresh (outdoor) air that is introduced into the passenger vehicle 10. Fresh air is introduced into the passenger vehicle 10 through the door 14 and/or the vehicle air conditioning system 18.

The controller 36 can be programmed with at least one of a preset carbon dioxide level that is based on the amount of carbon dioxide exhaled by a person (i.e. grams of carbon dioxide per minute per person), a required amount of fresh air per person, the interior volume of the passenger compartment 12, and how quickly fresh air can mix with the air in the passenger compartment 12. In another embodiment, the controller 36 can be programmed with a preset carbon dioxide level, where the preset carbon dioxide level is determined by an expressed comfort level of persons in the passenger compartment 12 of a passenger vehicle 10 in a test situation. That is, various levels of carbon dioxide are tested to determine passenger comfort for the tested level of carbon dioxide. The level of carbon dioxide in ambient air outside of the vehicle 10 is well known and substantially stable.

The embodiment illustrated in Fig. 1 functions as follows. The carbon dioxide sensor 34 monitors the level of carbon dioxide in the passenger compartment 12 and communicates the level of carbon dioxide to the controller 36. The controller 36 receives the monitored carbon dioxide level and compares it to the preset carbon dioxide level. In some embodiments the preset carbon dioxide level is a range of carbon dioxide levels. If the monitored level of carbon dioxide is above the preset level of carbon dioxide, then the controller 36 directs the damper 22 to open. If the monitored level of carbon dioxide is equal to the preset level of carbon dioxide, then the controller 36 does not change the position of the damper 22. If the monitored level of carbon dioxide is less than the preset level of carbon dioxide, then the controller 36 directs the damper 22 to close. In some embodiments multiple carbon dioxide level ranges are programmed into the controller 36. Depending on the carbon dioxide level range which is monitored, the controller 36 can direct the damper 22 to fully open or close, partially open or close, or maintain the current position.

The embodiment of the illustrated invention functions as follows. The carbon dioxide sensor 34 monitors the level of carbon dioxide in the passenger compartment 12 and communicates the level of carbon dioxide to the controller 36. The door sensor 16 senses the occurrence and duration of a door opening event of a door 14 of the passenger vehicle 10 and communicates the occurrence and duration of the door opening event to the controller 36. The damper sensor 32 senses the status of damper opening event (for example percentage of opening if operated continuously, or the occurrence of the damper opening event and the duration of the damper opening event, if operated on/off) and communicates the occurrence, percentage open, and duration of the damper opening event to the controller 36. The controller 36 estimates the amount of fresh air that is introduced into the passenger compartment 12 by comparing the information received from the door sensor 16 and damper sensor 32 with a programmed table which gives the amount of fresh air that is introduced into the passenger compartment 12 by the door opening event and/or damper opening event. If the amount of fresh air that is introduced into the passenger vehicle 10 by the door opening events and/or damper opening events is sufficient to lower the level of carbon dioxide in the passenger compartment 12 to the preset level, then the controller 36 directs the damper 22 to close. If the amount of fresh air that is introduced into the passenger vehicle 10 by one or more door opening events and/or damper opening events is not sufficient to lower the level of carbon dioxide in the passenger compartment 12 to the preset level, then the controller 36 directs the damper 22 to open. In some embodiments the preset level of carbon dioxide is a range of carbon dioxide levels. In some embodiments, multiple carbon dioxide level ranges are programmed into the controller 36. Depending on the monitored carbon dioxide level, the controller 36 can direct the damper 22 to fully open or close, partially open or close, or maintain the current position.

In some embodiments the controller 36 estimates the occupancy of the passenger compartment 12 based on the level of carbon dioxide sensed by the carbon dioxide sensor 34 and a fresh airflow rate. The fresh airflow rate is calculated by estimating the amount of fresh air that is introduced into the passenger compartment 12 by the damper 22. The controller 36 is programmed with an approximate airflow rate for a range of positions of the damper 22 and the speed of the evaporator fan 30. In an alternate embodiment the fresh airflow rate is calculated by estimating the amount of fresh air that is introduced into the passenger compartment 12 by the damper 12, the evaporator fan 30, and the door 14. The controller is also programmed with an approximate airflow rate that occurs when the door 14 is in the open position. The occupancy is calculated by multiplying the fresh airflow rate (volume/time) by the difference between the concentration of carbon dioxide in the passenger compartment 12 and the outdoor concentration of carbon dioxide (mass/volume), and dividing the result by the average carbon dioxide production rate per person (mass/time*person). Symbolically, the formula is:

$$(\text{fresh airflow rate} * (CO2 \text{ concentration of passenger compartment} - CO2 \text{ concentration}$$
$$\text{of outdoor air})) / CO2 \text{ production rate per person} = \text{passenger compartment occupancy}$$

After the controller 36 calculates the occupancy of the passenger compartment 12, the controller 36 operates at least one of the compressor 26 and the evaporator fan 30 at a level corresponding to a preset level for the occupancy of the passenger compartment 12. In this embodiment, the damper 22 is not opened or closed based on the occupancy of the passenger compartment 12; instead, the damper 22 is opened or closed based on the level of carbon dioxide sensed by the carbon dioxide sensor 34 as described in the preceding paragraph. In an alternative embodiment, the controller 36 estimates the occupancy of the passenger compartment 12 based on level of carbon dioxide sensed by the carbon dioxide sensor 34, the rate of change of the level of the carbon dioxide sensed by the carbon dioxide sensor 34, and a fresh airflow rate.

In an alternative embodiment, the controller determines the occupancy of the passenger compartment 12 as described above. At the same time, the controller can apply a control algorithm to reduce the energy consumption of the air conditioning system 18. The controller 36 is able to move the damper 22 to vary the amount of fresh air that enters the passenger compartment 12 based on the occupancy of the passenger compartment 12. The controller 36 is also able to vary the speed of the evaporator fan 30 based on the occupancy of the passenger compartment 12. In addition, the controller 36 can vary the speed of the compressor 26 based on the occupancy of the passenger compartment 12. By varying how often the damper 22 opens, the speed of the evaporator fan 30, and the speed of the compressor 26, the passenger vehicle 10 air conditioning system 18 is able to operate more efficiently because the air conditioning system 18 only operates at a level needed for the occupancy of the passenger compartment 12. In an alternative embodiment a variable displacement compressor (not shown) is used in place of the compressor 26, and the controller 36 varies the displacement of the variable displacement compressor based on the occupancy of the passenger compartment 12.

The illustrated embodiments described above have employed a carbon dioxide sensor 34 to monitor the level of carbon dioxide in the passenger compartment 12. However, any of the embodiments illustrated above can use a volatile organic compound (VOC) sensor (not shown), a dust sensor (not shown), or some other sensor which measures contaminates produced by humans, in place of the carbon dioxide sensor 34. In addition, the carbon dioxide sensor 34 can be used in conjunction with at least one of a VOC sensor, a dust sensor, and some other sensor which measures contaminates produced by humans. One or more alternate or additional sensors communicate with the controller 36 and the controller 36 compares the level of sensed contaminate to a preset level of sensed contaminate. The controller 36 then operates as described in one of the embodiments above.

In one embodiment at least one of the carbon dioxide sensor 34, VOC sensor, dust sensor, and some other sensor which measures contaminates produced by humans, can be placed in the return air duct 28 of the passenger vehicle 10 air conditioning system 18. In another embodiment, at least one of the carbon dioxide sensor 34, VOC sensor, dust sensor, and some other sensor which measures contaminates produced by humans, can be placed in the passenger compartment 12 of the passenger vehicle 10.

Thus, the invention provides, among other things, a passenger vehicle air conditioning system. Various features and advantages of the invention are set forth in the following claims.

## Claims

1.    A passenger vehicle air conditioning system comprising:

a fresh air duct (20) fluidly connecting ambient air of the environment outside of the passenger vehicle (10) and a passenger compartment (12) inside of the passenger vehicle;
a damper (22) disposed in the fresh air duct (20) and movable within the duct (20) to vary the amount of ambient air allowed to enter the passenger compartment;
a contaminate sensor (34) operable to monitor a level of contaminate indicative of the contaminate level within the passenger compartment (12) of the passenger vehicle;
a controller (36) in communication with the contaminate sensor (34) and the damper, wherein the controller (36) moves the damper (22) to vary the amount of fresh air that enters the passenger compartment (12) based on the contaminate level sensed by the contaminate sensor; and
a door sensor (16) operable to detect the occurrence of a door opening event of a door (14) to the passenger compartment (12);
**characterized by** the door sensor (16) being operable to monitor the duration of a door opening event of the door (14) to the passenger compartment (12),
wherein the controller (36) is in communication with the door sensor (16) and estimates the fresh airflow rate based on the door opening event as sensed by the door sensor (16) and moves the damper (22) to vary the amount of fresh air that enters the passenger compartment (12) based on the contaminate level sensed by the contaminate sensor (34).

2.    The passenger vehicle air conditioning system of claim 1, further comprising a return air duct (28) fluidly connecting the passenger compartment (12) with the fresh air duct (20), the return air duct (28) receiving air from inside the passenger compartment (12) upstream of the fresh air duct (20), wherein the contaminate sensor (34) is disposed in the return air duct (28).

3.    The passenger vehicle (10) air conditioning system of claim 2, wherein the controller (36) is programmed with a preset contaminate level, and moves the damper (22) to vary the amount of fresh air that enters the passenger compartment (12) based on the contaminate level sensed by the contaminate sensor (34) relative to the preset contaminate level.

4.    The passenger vehicle air conditioning system of claim 1, wherein the controller (36) estimates the occupancy of the passenger compartment (12) based on the contaminate level sensed by the contaminate sensor (34) and the fresh airflow rate, and wherein the controller (36) moves the damper (22) to vary the amount of fresh air that enters the passenger compartment (12) based on the occupancy estimated by the controller (36).

5.    The passenger vehicle air conditioning system of claim 4, further comprising a refrigerant circuit including an evaporator (24), an evaporator fan (30) operable to move air through the evaporator (24), and a compressor (26) for directing refrigerant to the evaporator (24), wherein the controller (36) varies the speed of the evaporator fan (30) and the speed of the compressor (26) based on the occupancy estimated by the controller (36).

6.    The passenger vehicle air conditioning system of claim 4, wherein the controller (36) is adapted to move the damper (22) to near fully open position providing a first amount of fresh air that enters the passenger compartment (12) that corresponds to a designed unit capacity based on the design occupancy, and wherein the controller (36) is adapted to move the damper (22) in the closing direction to a partially closed position providing a second amount of fresh air less than the first amount that enters the passenger compartment (12) based on the occupancy estimated by the controller (36).

7. The passenger vehicle air conditioning system of any preceding claim, wherein the contaminate is carbon dioxide and the contaminate sensor (34) is a carbon dioxide sensor.

8. A passenger vehicle comprising:

    a passenger compartment (12) having a door (14); and
    an air conditioning system according to any preceding claim.

9. A method of operating an air conditioning system of a passenger vehicle, the method comprising:

    fluidly connecting with a fresh air duct (20) of the air conditioning system ambient air of the environment outside of the passenger vehicle (10) and a passenger compartment (12) inside of the passenger vehicle;
    providing a damper (22) disposed in the fresh air duct;
    monitoring a contaminate level indicative of a contaminate level within a passenger compartment (12) of the passenger vehicle;
    monitoring an occurrence and duration of a door opening event of a door to the passenger compartment;
    estimating a fresh airflow rate based on the door opening event; and
    moving the damper (22) to vary the amount of fresh air that enters the passenger compartment (12) based on the contaminate level.

10. The method of claim 9, further comprising moving the damper (22) to vary the amount of fresh air that enters the passenger compartment (12) based on the contaminate level relative to a preset contaminate level.

11. The method of claim 9, further comprising estimating the occupancy of the passenger compartment (12) based on the contaminate level; and
moving the damper (22) to vary the amount of fresh air that enters the passenger compartment (12) based on the occupancy.

12. The method of claim 11, further comprising estimating the occupancy of the passenger compartment (12) based level of carbon dioxide and the fresh airflow rate.

13. The method of claim 12, further comprising varying the speed of an evaporator fan of the refrigeration system and the speed of a compressor of the refrigeration system based on the occupancy.

14. The method of claim 13, further comprising moving the damper (22) to near a fully open position providing a first amount of fresh air that enters the passenger compartment (12) that corresponds to a designed unit capacity based on the design occupancy; and
moving the damper (22) in the closing direction to a partially closed position providing a second amount of fresh air less than the first amount that enters the passenger compartment.

15. The method of any one of claims 9 to 14, wherein the contaminate is carbon dioxide.

**Patentansprüche**

1. Klimaanlage für ein Personenbeförderungsfahrzeug, die Folgendes umfasst:

    einen Frischluftkanal (20), der eine Strömungsverbindung von Umgebungsluft in der Umgebung außerhalb des Beförderungsfahrzeugs (10) und einem Fahrgastraum (12) innerhalb des Personenbeförderungsfahrzeugs herstellt;
    eine Klappe (22), die in dem Frischluftkanal (20) angeordnet und in dem Kanal (20) beweglich ist, um die Menge an Umgebungsluft, deren Eintritt in den Fahrgastraum gestattet wird, zu variieren;
    einen Verschmutzungssensor (34), der dahingehend betrieben werden kann, einen Verschmutzungsgrad zu überwachen, der den Verschmutzungsgrad innerhalb des Fahrgastraums (12) des Personenbeförderungsfahrzeugs anzeigt;

eine Steuerung (36), die mit dem Verschmutzungssensor (34) und der Klappe in Verbindung steht, wobei die Steuerung (36) die Klappe (22) dahingehend bewegt, die Menge an Frischluft, die in den Fahrgastraum (12) eintritt, basierend auf dem durch den Verschmutzungssensor erfassten Verschmutzungsgrad zu variieren; und

einen Türsensor (16), der dahingehend betrieben werden kann, das Auftreten eines Türöffnungsereignisses einer Tür (14) zum Fahrgastraum (12) zu detektieren;

wobei der Türsensor (16) dahingehend betrieben werden kann, die Dauer eines Türöffnungsereignisses der Tür (14) zum Fahrgastraum (12) zu überwachen,

**dadurch gekennzeichnet, dass** die Steuerung (36) mit dem Türsensor (16) in Verbindung steht und den Frischluftdurchsatz basierend auf dem durch den Türsensor (16) erfassten Türöffnungsereignis schätzt und die Klappe (22) dahingehend bewegt, die Menge an Frischluft, die in den Fahrgastraum (12) eintritt, basierend auf dem durch den Verschmutzungssensor (34) erfassten Verschmutzungsgrad zu variieren.

2. Klimaanlage für ein Personenbeförderungsfahrzeug nach Anspruch 1, die ferner einen Luftrückführungskanal (28) umfasst, der eine Strömungsverbindung des Fahrgastraums (12) mit dem Frischluftkanal (20) herstellt, wobei der Luftrückführungskanal (28) Luft aus dem Inneren des Fahrgastraums (12) stromaufwärts des Frischluftkanals (20) aufnimmt, wobei der Verschmutzungssensor (34) in dem Luftrückführungskanal (28) angeordnet ist.

3. Klimaanlage für ein Personenbeförderungsfahrzeug (10) nach Anspruch 2, wobei die Steuerung (36) mit einem voreingestellten Verschmutzungsgrad programmiert ist und die Klappe (22) dahingehend bewegt, die Menge an Frischluft, die in den Fahrgastraum (12) eintritt, basierend auf dem durch den Verschmutzungssensor (34) erfassten Verschmutzungsgrad bezüglich des voreingestellten Verschmutzungsgrads zu variieren.

4. Klimaanlage für ein Personenbeförderungsfahrzeug nach Anspruch 1, wobei die Steuerung (36) die Belegung des Fahrgastraums (12) basierend auf dem durch den Verschmutzungssensor (34) erfassten Verschmutzungsgrad und dem Frischluftdurchsatz schätzt, und wobei die Steuerung (36) die Klappe (22) dahingehend bewegt, die Menge an Frischluft, die in den Fahrgastraum (12) eintritt, basierend auf der durch die Steuerung (36) geschätzten Belegung zu variieren.

5. Klimaanlage für ein Personenbeförderungsfahrzeug nach Anspruch 4, ferner umfassend einen Kühlmittelkreis, der einen Verdampfer (24), ein Verdampfergebläse (30), das dahingehend betrieben werden kann, Luft durch den Verdampfer (24) zu bewegen, und einen Kompressor (26) zum Leiten von Kühlmittel zum Verdampfer (24) umfasst, wobei die Steuerung (36) die Drehzahl des Verdampfergebläses (30) und die Drehzahl des Kompressors (26) basierend auf der durch die Steuerung (36) geschätzten Belegung variiert.

6. Klimaanlage für ein Personenbeförderungsfahrzeug nach Anspruch 4, wobei die Steuerung (36) dazu ausgelegt ist, die Klappe (22) in die nahezu vollständig geöffnete Stellung zu bewegen, wodurch eine erste Menge an in den Fahrgastraum (12) eintretender Frischluft bereitgestellt wird, die einer Einheitskapazitätsvorgabe basierend auf der Belegungsvorgabe entspricht, und wobei die Steuerung (36) dazu ausgelegt ist, die Klappe (22) in der Schließrichtung in eine teilweise geschlossene Stellung zu bewegen, wodurch eine zweite Menge an in den Fahrgastraum (12) eintretender Frischluft, die unter der ersten Menge liegt, basierend auf der durch die Steuerung (36) geschätzten Belegung bereitgestellt wird.

7. Klimaanlage für ein Personenbeförderungsfahrzeug nach einem vorhergehenden Anspruch, wobei es sich bei der Verschmutzung um Kohlendioxid und bei dem Verschmutzungssensor (34) um einen Kohlendioxidsensor handelt.

8. Personenbeförderungsfahrzeug, das Folgendes umfasst:

einen Fahrgastraum (12) mit einer Tür (14); und
eine Klimaanlage nach einem vorhergehenden Anspruch.

9. Verfahren zum Betrieb einer Klimaanlage eines Personenbeförderungsfahrzeugs, wobei das Verfahren Folgendes umfasst:

Herstellen einer Strömungsverbindung von Umgebungsluft in der Umgebung außerhalb des Beförderungsfahrzeugs (10) und einem Fahrgastraum (12) innerhalb des Beförderungsfahrzeugs mit einem Frischluftkanal (20) der Klimaanlage;

Bereitstellen einer in dem Frischluftkanal angeordneten Klappe (22);
Überwachen eines Verschmutzungsgrads, der einen Verschmutzungsgrad innerhalb eines Fahrgastraums (12) des Personenbeförderungsfahrzeugs anzeigt;
Überwachen des Auftretens und einer Dauer eines Türöffnungsereignisses einer Tür zum Fahrgastraum;
Schätzen eines Frischluftdurchsatzes basierend auf dem Türöffnungsereignis; und
Bewegen der Klappe (22) zum Variieren der Menge an Frischluft, die in den Fahrgastraum (12) eintritt, basierend auf dem Verschmutzungsgrad.

10. Verfahren nach Anspruch 9, das ferner Bewegen der Klappe (22) zum Variieren der Menge an Frischluft, die in den Fahrgastraum (12) eintritt, basierend auf dem Verschmutzungsgrad bezüglich eines voreingestellten Verschmutzungsgrads umfasst.

11. Verfahren nach Anspruch 9, das ferner Schätzen der Belegung des Fahrgastraums (12) basierend auf dem Verschmutzungsgrad; und
Bewegen der Klappe (22) zum Variieren der Menge an Frischluft, die in den Fahrgastraum (12) eintritt, basierend auf der Belegung umfasst.

12. Verfahren nach Anspruch 11, das ferner Schätzen der Belegung des Fahrgastraums (12) basierend auf dem Grad an Kohlendioxid und dem Frischluftdurchsatz umfasst.

13. Verfahren nach Anspruch 12, das ferner Variieren der Drehzahl eines Verdampfergebläses des Kühlsystems und der Drehzahl eines Kompressors des Kühlsystems basierend auf der Belegung umfasst.

14. Verfahren nach Anspruch 13, das ferner Bewegen der Klappe (22) in eine nahezu vollständig geöffnete Stellung, wodurch eine erste Menge an in den Fahrgastraum (12) eintretender Frischluft bereitgestellt wird, die einer Einheitskapazitätsvorgabe basierend auf der Belegung der Konstruktion entspricht; und
Bewegen der Klappe (22) in der Schließrichtung in eine teilweise geschlossene Stellung, wodurch eine zweite Menge an in den Fahrgastraum eintretender Frischluft, die unter der ersten Menge liegt, bereitgestellt wird, umfasst.

15. Verfahren nach einem der Ansprüche 9-14, wobei es sich bei der Verschmutzung um Kohlendioxid handelt.

**Revendications**

1. Système de climatisation de véhicule pour passagers, comprenant :

un conduit d'air frais (20) reliant fluidiquement l'air ambiant de l'environnement à l'extérieur du véhicule pour passagers (10) à un habitacle pour passagers (12) à l'intérieur du véhicule pour passagers ;
un amortisseur (22) disposé dans le conduit d'air frais (20) et déplaçable à l'intérieur du conduit (20) pour faire varier la quantité d'air ambiant pouvant entrer à l'intérieur de l'habitacle pour passagers ;
un capteur de contaminants (34) apte à contrôler un niveau de contaminants indiquant le niveau de contaminants à l'intérieur de l'habitacle pour passagers (12) du véhicule pour passagers ;
un dispositif de commande (36) en communication avec le capteur de contaminants (34) et l'amortisseur, le dispositif de commande (36) déplaçant l'amortisseur (22) pour faire varier la quantité d'air frais qui entre dans l'habitacle pour passagers (12) sur la base du niveau de contaminants détecté par le capteur de contaminants ; et
un capteur de porte (16) apte à détecter un événement d'ouverture de porte d'une porte (14) de l'habitacle pour passagers (12) ;
le capteur de porte (16) étant apte à contrôler la durée d'un événement d'ouverture de porte de la porte (14) de l'habitacle pour passagers (12),
**caractérisé en ce que** le dispositif de commande (36) est en communication avec le capteur de porte (16) et évalue le débit d'air frais sur la base de l'événement d'ouverture de porte détecté par le capteur de porte (16) et déplace l'amortisseur (22) pour faire varier la quantité d'air frais qui entre dans l'habitacle pour passagers (12) sur la base du niveau de contaminants détecté par le capteur de contaminants (34).

2. Système de climatisation de véhicule pour passagers selon la revendication 1, comprenant en outre un conduit d'air de retour (28) reliant fluidiquement l'habitacle pour passagers (12) au conduit d'air frais (20), le conduit d'air de retour (28) recevant de l'air provenant de l'intérieur de l'habitacle pour passagers (12) en amont du conduit d'air frais (20), le capteur de contaminants (34) étant disposé dans le conduit d'air de retour (28).

3. Système de climatisation de véhicule pour passagers (10) selon la revendication 2, dans lequel le dispositif de commande (36) est programmé avec un niveau de contaminants prédéfini, et déplace l'amortisseur (22) pour faire varier la quantité d'air frais qui entre dans l'habitacle pour passagers (12) sur la base du niveau de contaminants détecté par le capteur de contaminants (34) par rapport au niveau de contaminants prédéfini.

4. Système de climatisation de véhicule pour passagers selon la revendication 1, dans lequel le dispositif de commande (36) évalue l'occupation de l'habitacle pour passagers (12) sur la base du niveau de contaminants détecté par le capteur de contaminants (34) et du débit d'air frais, et dans lequel le dispositif de commande (36) déplace l'amortisseur (22) pour faire varier la quantité d'air frais qui entre dans l'habitacle pour passagers (12) sur la base de l'occupation évaluée par le dispositif de commande (36).

5. Système de climatisation de véhicule pour passagers selon la revendication 4, comprenant en outre un circuit de réfrigérant comportant un évaporateur (24), un ventilateur d'évaporateur (30) apte à déplacer de l'air à travers l'évaporateur (24) et un compresseur (26) pour orienter le réfrigérant vers l'évaporateur (24), le dispositif de commande (36) faisant varier la vitesse du ventilateur d'évaporateur (30) et la vitesse du compresseur (26) sur la base de l'occupation évaluée par le dispositif de commande (36).

6. Système de climatisation de véhicule pour passagers selon la revendication 4, dans lequel le dispositif de commande (36) est adapté pour déplacer l'amortisseur (22) à la position presque complètement ouverte fournissant une première quantité d'air frais qui entre dans l'habitacle pour passagers (12) qui correspond à une capacité unitaire désignée sur la base de l'occupation désignée, et dans lequel le dispositif de commande (36) est adapté pour déplacer l'amortisseur (22) dans la direction de fermeture à une position partiellement fermée fournissant une deuxième quantité d'air frais inférieure à la première quantité qui pénètre dans l'habitacle pour passagers (12) sur la base de l'occupation évaluée par le dispositif de commande (36).

7. Système de climatisation de véhicule pour passagers selon l'une quelconque des revendications précédentes, dans lequel le contaminant est du dioxyde de carbone et le capteur de contaminants (34) est un capteur de dioxyde de carbone.

8. Véhicule pour passagers comprenant :

   un habitacle pour passagers (12) ayant une porte (14) ; et
   un système de climatisation selon l'une quelconque des revendications précédentes.

9. Procédé de fonctionnement d'un système de climatisation d'un véhicule pour passagers, le procédé comprenant :

   la connexion fluidique, par le biais d'un conduit d'air frais (20) du système de climatisation, d'air ambiant de l'environnement à l'extérieur du véhicule pour passagers (10) à un habitacle pour passagers (12) à l'intérieur du véhicule pour passagers ;
   la fourniture d'un amortisseur (22) disposé dans le conduit d'air frais ;
   le contrôle d'un niveau de contaminants indiquant un niveau de contaminants à l'intérieur d'un habitacle pour passagers (12) du véhicule pour passagers ;
   le contrôle d'un événement et d'une durée d'ouverture de porte d'une porte de l'habitacle pour passagers ;
   l'estimation d'un débit d'air frais sur la base de l'événement d'ouverture de porte ; et
   le déplacement de l'amortisseur (22) pour faire varier la quantité d'air frais qui entre à l'intérieur de l'habitacle pour passagers (12) sur la base du niveau de contaminants.

10. Procédé selon la revendication 9, comprenant en outre le déplacement de l'amortisseur (22) pour faire varier la quantité d'air frais qui entre à l'intérieur de l'habitacle pour passagers (12) sur la base du niveau de contaminants par rapport à un niveau de contaminants prédéfini.

11. Procédé selon la revendication 9, comprenant en outre l'estimation de l'occupation de l'habitacle pour passagers (12) sur la base du niveau de contaminants ; et
    le déplacement de l'amortisseur (22) pour faire varier la quantité d'air frais qui entre à l'intérieur de l'habitacle pour passagers (12) sur la base de l'occupation.

12. Procédé selon la revendication 11, comprenant en outre l'estimation de l'occupation de l'habitacle pour passagers (12) sur la base du niveau de dioxyde de carbone et du débit d'air frais.

13. Procédé selon la revendication 12, comprenant en outre le fait de faire varier la vitesse d'un ventilateur d'évaporateur du système de réfrigération et la vitesse d'un compresseur du système de réfrigération sur la base de l'occupation.

14. Procédé selon la revendication 13, comprenant en outre le déplacement de l'amortisseur (22) jusqu'à une position presque complètement ouverte fournissant une première quantité d'air frais qui entre à l'intérieur de l'habitacle pour passagers (12) qui correspond à une capacité unitaire désignée sur la base de l'occupation désignée ; et le déplacement de l'amortisseur (22) dans la direction de fermeture jusqu'à une position partiellement fermée fournissant une deuxième quantité d'air frais inférieure à la première quantité qui entre à l'intérieur de l'habitacle pour passagers.

15. Procédé selon l'une quelconque des revendications 9 à 14, dans lequel le contaminant est du dioxyde de carbone.

**FIG. 1**

EP 2 407 326 B1

*FIG. 2*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19847504
- DE 102007018572
- WO 02074600 A
- JP 2009051364 A